# FASCICULE DE BREVET EUROPEEN

(11) **EP 3 735 369 B1**
(45) Date de publication et mention de la délivrance du brevet: **25.01.2023**
(21) Numéro de dépôt: 18839823.4
(22) Date de dépôt: 13.12.2018
(51) Int. Cl.: B62D 25/04, B62D 25/20

(54) **VEHICULE EQUIPE D'UN APPUI-CRIC DANS LE RENFORT DE PIED AVANT ET APPUI-CRIC POUR UN TEL VEHICULE**
FAHRZEUG MIT EINER WAGENHEBERAUFNAHME IN DER VORDEREN SÄULENVERSTÄRKUNG UND WAGENHEBERAUFNAHME FÜR EIN SOLCHES FAHRZEUG
VEHICLE EQUIPPED WITH A JACKING POINT IN THE FRONT PILLAR REINFORCEMENT, AND JACKING POINT FOR SUCH A VEHICLE

(30) Priorité: 04.01.2018 FR 1850036
(43) Date de publication de la demande: 11.11.2020
(73) Titulaire: PSA Automobiles SA, 78300 Poissy (FR)
(72) Inventeur: REY, Loïc, 25230 SELONCOURT (FR)
(86) Numéro de dépôt international: PCT/FR2018/053243
(87) Numéro de publication internationale: WO 2019/135034

(56) Documents cités:
- FR-A1- 2 922 508
- FR-A1- 3 044 620
- US-A1- 2017 203 792

## Description

La présente invention concerne un véhicule comprenant un appui-cric afin de faciliter le positionnement d'un cric pour le levage dudit véhicule. L'invention concerne également un appui-cric.

Le cric permet de soulever un côté d'un véhicule. Un appui-cric est un dispositif complémentaire placé dans la partie inférieure d'un véhicule pour maintenir en position un cric lors du levage dudit véhicule. Généralement, les appui-crics sont placés à proximité des roues de véhicules. Ainsi, en cas de nécessité de changer de roue, il est possible de soulever uniquement le côté de véhicule où cette opération doit être effectuée.

Le document FR3044620 décrit un appui-cric configuré pour être installé sur des éléments de soubassement de véhicules, tels qu'un longeron. Il se compose d'un flan de tôle sensiblement rectangulaire dont l'extrémité inférieure de la pièce présente une languette de réception de la tête d'un cric. L'extrémité opposée présente une languette de fixation à un élément de soubassement du véhicule. Les bords latéraux s'étendant entre les extrémités inférieure et supérieure de la pièce sont pliés du même côté par rapport au plan principal du flan pour former les parois latérales de l'appui-cric. Lesdites parois latérales sont pourvues à leur extrémité adjacente à la languette de réception du cric d'une patte de fixation à un élément de soubassement du véhicule. Au moins un moyen de fixation à un élément de soubassement est, en outre, prévu au niveau des bords des parois latérales.

Le pied avant d'un véhicule est un montant situé vers l'avant du côté de caisse, entre un passage de roue avant et une ouverture de porte avant. Les renforts de pied avant sont des dispositifs situés au niveau de la jonction entre le pied avant et le longeron d'un véhicule. Leur rôle est de renforcer la portion coudée du pied avant dans l'éventualité d'une collision frontale. Le renfort a donc également une forme coudée, en forme de « L ». Il comprend une cavité et des feuillures d'assemblage autour de ladite cavité.

Le document FR2922508 décrit une structure comportant un appui-cric sous forme de tôle rectangulaire fixée au niveau du longeron et du pied avant. Cet appui-cric peut également être fixé à un renfort de liaison améliorant la transmission des efforts entre le pied avant et le longeron en cas de choc frontal.

Cette transmission d'efforts en voie basse est intéressante en ce qu'elle améliore les prestations du véhicule en cas de choc frontal. Néanmoins, la multiplication des pièces et des éléments à assembler pour parvenir à un tel résultat est coûteuse et augmente le temps de montage du véhicule. Par ailleurs, elle n'entre pas dans les objectifs actuels d'allègement de la masse globale des véhicules.

Il est également connu d'utiliser des renforts de pied avant pour améliorer le comportement du véhicule en cas de choc frontal. Ainsi, le document FR3024414 décrit un renfort de pied avant couvrant la totalité de la surface de la portion coudée du pied avant. Selon un mode de réalisation possible, le renfort peut intégrer une fonction d'appui d'un cric de levage. L'élément de renfort proposé est sensiblement plat et s'étend selon la direction longitudinale du véhicule.

Des éléments de renfort de pied avant montrant des structures creuses épousant la forme de la section coudée du pied avant sont également connues et décrites par exemple dans le document FR2923203.

L'invention a pour objectif de pallier au moins un des inconvénients de l'art antérieur en proposant un véhicule équipé d'un appui-cric fixé à un renfort de pied avant, et montrant une double fonction d'appui-cric et d'élément de renfort.

A cet effet et selon un premier aspect, l'invention a pour objet un véhicule comprenant :
- un renfort de pied avant se présentant sous forme d'une demi-coque définissant une cavité dont les parois latérales sont bordées par des feuillures d'assemblage formant des rebords, la demi-coque formant un coude de sorte à montrer une paroi latérale avant s'étendant verticalement, et deux parois latérales inférieure et supérieure s'étendant selon la direction longitudinale du véhicule; et
- un appui-cric comprenant un corps montrant des extrémités inférieure et supérieure, fixées sur les rebords des parois latérales inférieure et supérieure du renfort de pied avant ;
le véhicule est remarquable en ce que l'appui-cric comprend en outre un bras latéral s'étendant depuis un des bords latéraux de son corps, en direction de la paroi latérale avant du renfort de pied avant jusqu'à se placer en appui contre ladite paroi latérale avant.

Comme on l'aura compris à la lecture de la définition qui vient d'en être donnée, l'invention propose un véhicule comprenant un appui-cric comprenant un bras latéral s'étendant depuis le flan de tôle central vers la face avant du renfort de manière à augmenter la rigidité de ladite face avant du renfort en cas d'une collision frontale. L'invention est remarquable en ce qu'elle propose un double renforcement du pied avant, d'une part par la présence d'un renfort de pied avant et d'autre part par la présence d'un appui-cric configuré pour montrer une fonction de renfort.

Selon un mode de réalisation préféré, l'appui-cric montre une forme générale en « T » ou en « L ».

Selon une mise en oeuvre préférée de l'invention, le bras latéral de l'appui-cric présente une inclinaison par rapport au plan défini par son corps, de sorte à s'enfoncer dans la cavité et à être en contact avec la paroi latérale avant dans ladite cavité. Par cette configuration, l'appui-cric prend appui sur une paroi s'étendant selon la direction transversale du véhicule, donc selon une position décalée par rapport à la feuillure d'assemblage avant, offrant donc une voie supplémentaire de transmission des efforts.

Selon un mode de réalisation préféré, le bras latéral de l'appui-cric comprend, en outre, une patte d'appui et/ou de fixation disposée en extrémité dudit bras latéral, de préférence pour sa fixation à ladite paroi latérale avant. Ainsi, la surface de contact entre l'extrémité du bras latéral et la paroi latérale est augmentée ce qui permet une meilleure transmission des efforts.

Avantageusement, le bras latéral de l'appui-cric comprend, au niveau de son extrémité, un doigt de pré-maintien configuré pour se placer en appui sur le rebord de la paroi latérale avant dudit renfort de pied avant. De préférence, le bras latéral de l'appui-cric comprend, en outre, une patte d'appui et/ou de fixation, et le doigt de pré-maintien s'étend depuis un bord de ladite patte d'appui et/ou de fixation. Cette configuration permet de faciliter le procédé de montage de l'appui-cric en lui offrant un appui supplémentaire en extrémité du bras latéral, lui évitant de tomber au fond de la cavité du renfort de pied avant, lors de son assemblage.

De manière avantageuse, le rebord de la paroi latérale avant du renfort de pied avant montre un logement débouchant sur la cavité, recevant ledit doigt de pré-maintien et dimensionné pour placer la surface dudit doigt de pré-maintien en continuité de surface avec la surface dudit rebord. Cette configuration permet de ne pas multiplier les surépaisseurs au niveau de la feuillure d'assemblage qui risqueraient de nuire à l'étanchéité de l'ensemble.

Selon un mode de réalisation préféré, l'extrémité de l'appui-cric est fixée au renfort de pied avant par au moins un point de soudure. Lorsque le bras présente une inclinaison, on notera que les points de soudure sont disposés dans la cavité et non pas sur les rebords.

Préférentiellement, le bras latéral de l'appui-cric et/ou le corps de l'appui-cric comprend au moins une nervure de renfort. Cette configuration permet d'améliorer la rigidité montrée par l'appui-cric.

Selon un second aspect, l'invention concerne un appui-cric pour véhicule, tel que défini selon le premier aspect, comprenant un corps présentant une extrémité supérieure et une extrémité inférieure, l'extrémité inférieure étant configurée pour recevoir la tête d'un cric, ledit appui-cric étant destiné à être fixé dans un renfort de pied avant par ses extrémités inférieure et supérieure ; l'appui-cric est remarquable en ce qu'il comprend en outre un bras latéral s'étendant depuis un des bords latéraux de son corps, de sorte à ce que ledit appui-cric montre une forme générale en « L » ou en « T ».

De préférence, ledit bras latéral présente deux extrémités, une extrémité reliée au corps de l'appui-cric et une extrémité libre, et :
- montre une inclinaison par rapport au plan formé par le corps de l'appui-cric ; et/ou
- comprend une patte d'appui et/ou de fixation disposée à l'extrémité libre dudit bras latéral ; et/ou
- comprend un doigt de pré-maintien disposé à l'extrémité libre dudit bras latéral ; et/ou
- comprend au moins une nervure de renfort s'étendant selon sa longueur.

L'invention sera bien comprise et d'autres aspects et avantages apparaîtront clairement à la lecture de la description qui suit, donnée à titre d'exemple, en référence aux planches de dessins annexées sur lesquelles :
- La figure 1 est une vue montrant un premier exemple de réalisation d'un véhicule et d'un appui-cric selon l'invention, dans laquelle le bras latéral de l'appui-cric s'étend parallèlement au corps dudit appui-cric.
- Les figures 2 et 3 sont des vues d'un deuxième exemple de réalisation d'un véhicule et d'un appui-cric selon l'invention, dans lesquelles le bras latéral de l'appui-cric est incliné par rapport au corps dudit appui-cric.

Dans la description qui suit, le terme « comprendre » est synonyme de « inclure » et n'est pas limitatif en ce qu'il autorise la présence d'autres éléments dans les véhicules et les dispositifs de type appui-cric et renfort de pied avant. Il est entendu que le terme « comprendre » inclut les termes « consister en ». Sur les différentes figures, les mêmes références désignent des éléments identiques ou similaires. Les termes « inférieur », « supérieur », « avant », « arrière » s'entendront par rapport à l'orientation générale du véhicule. Le terme « inférieur » indiquera une proximité avec le sol plus importante selon la direction verticale que respectivement le terme « supérieur ». Le terme « avant » indiquera un positionnement orienté vers le devant d'un véhicule selon la direction horizontale et le terme « arrière » indiquera un positionnement orienté vers l'arrière d'un véhicule selon la même direction.

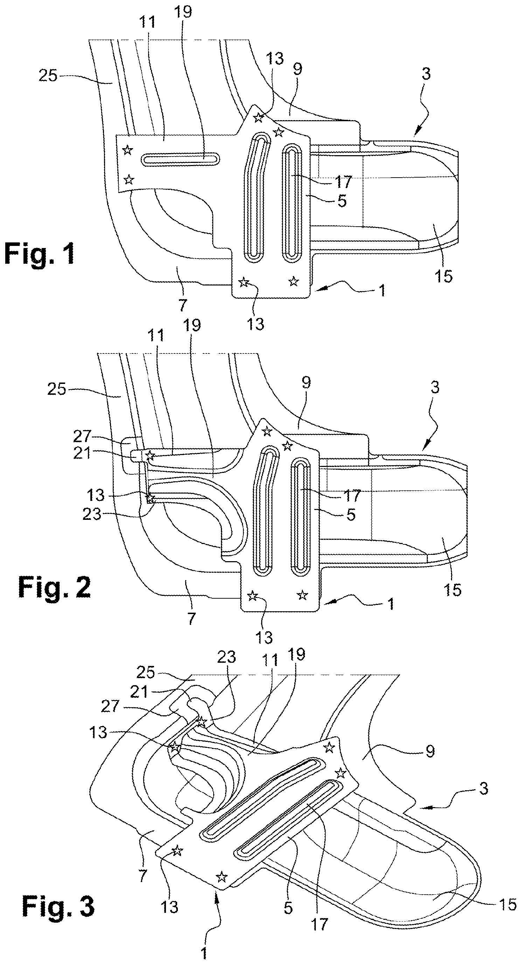

La figure 1 illustre un appui-cric 1 tel que fixé sur un renfort de pied avant 3 selon l'invention. Le renfort de pied avant 3 comprend une cavité 15 montrant des parois latérales et un fond, et des feuillures d'assemblage (7, 9, 25) formant les rebords des parois latérales. Ledit renfort 3 a une forme générale en « L ». L'appui-cric 1 se présente sous forme d'un flan de tôle dont le corps 5 est disposé à cheval entre les deux parois latérales inférieure et supérieure du renfort de pied 3, lesdites parois s'étendant selon la direction longitudinale du véhicule. Le corps 5 de l'appui-cric 1 est donc orienté verticalement et s'étend entre les rebords (7, 9) situés sur la partie horizontale du renfort 3 ou au niveau du coude pour ce qui est du rebord supérieur 9. L'extrémité supérieure du corps 5 de l'appui-cric 1 forme une interface de fixation avec le rebord supérieur 9. L'extrémité inférieure du corps 5 de l'appui-cric 1 forme une interface de fixation avec le rebord inférieur 7. L'extrémité inférieure du corps 5 de l'appui-cric 1 s'étend verticalement en-dessous dudit rebord inférieur 7, débordant de ce rebord 7, de sorte à former une languette de réception de la tête d'un cric. Le corps 5 de l'appui-cric 1 est fixé par ses extrémités inférieure et supérieure à la pièce de renfort 3 par des moyens d'assemblage 13. Préférentiellement, les moyens d'assemblage sont des points de soudure 13, l'assemblage de l'appui-cric 1 et du renfort de pied 3 s'effectuant par soudage.

Selon l'invention, le renfort de pied avant 3 présente une paroi latérale avant s'étendant verticalement, et l'appui-cric 1 comprend, en outre, un bras latéral 11 s'étendant depuis un des bords latéraux son corps 5, en direction de la paroi latérale avant du renfort de pied 3 jusqu'à se placer en appui contre ladite paroi latérale avant. De préférence, le bras latéral 11 est fixé à ladite paroi avant, par exemple par soudage. Dans ce premier mode de réalisation, le bras 11 est dimensionné pour se placer en appui contre le rebord 25 de ladite paroi latérale avant, en vue de sa fixation. Il est donc configuré pour s'étendre dans le même plan que le corps 5 de l'appui-cric 1.

L'invention est remarquable en ce que les efforts subis par la paroi avant, verticale, du renfort de pied avant 3, sont ainsi transmis aux parties horizontales de ce même renfort de pied avant 3, et par la suite au longeron du véhicule, au moyen de l'appui-cric 1. Ainsi l'appui-cric 1 joue le rôle de voie de transmission des efforts subis et d'élément de renforcement s'opposant à la déformation de la paroi avant du renfort de pied avant 3 en cas de collision frontale.

Selon un mode de réalisation préféré de l'invention, illustré sur les figures 2 et 3, le bras latéral 11 de l'appui-cric 1 présente une inclinaison par rapport au plan défini par le corps 5 dudit appui-cric, de sorte à s'enfoncer dans la cavité 15, en direction du fond de celle-ci, et à être fixé sur la paroi latérale avant dans ladite cavité. La longueur du bras latéral 11 ne dépasse pas le périmètre de la cavité 15 du renfort de pied avant 3, si bien qu'il se pose en appui contre ladite paroi latérale en elle-même et non pas sur son rebord 25.

A cet effet, préférentiellement, le bras latéral 11 de l'appui-cric 1 comprend en outre une patte 23 d'appui et/ou de fixation disposée en extrémité dudit bras latéral 11. Cette patte 23 est agencée pour être parallèle à ladite paroi latérale et permet d'augmenter la surface d'appui de l'extrémité du bras latéral 11. Elle permet également de faciliter la fixation du bras latéral dans la cavité, cette fixation se faisant préférentiellement par soudage. La possibilité que le bras latéral 11 de l'appui-cric 1 se place en contact de la paroi latérale avant du renfort de pied avant 3 sans pour autant se placer contre son rebord avant 25 permet de simplifier le montage de l'ensemble. En particulier, cette configuration permet d'éviter d'avoir à souder ensemble plus de trois épaisseurs de tôle au niveau des feuillures d'assemblage, ce qui pourrait nuire à l'étanchéité de l'ensemble. Elle permet en outre d'aller renforcer une zone moins rigide selon la direction longitudinale du véhicule par sa nature même, à savoir la paroi latérale de la cavité 15.

Selon l'invention, l'inclinaison du bras est aussi faible que possible pour rester autant que possible selon la direction longitudinale du véhicule. Aussi, l'extrémité du bras latéral 11 ne touche pas le fond de la cavité 15. Afin de faciliter son positionnement et sa fixation éventuelle, l'extrémité du bras latéral 11 est pourvue d'un doigt de pré-maintien 21 configuré pour se placer en appui sur le rebord 25 de la paroi latérale avant dudit renfort de pied avant 3. Lorsque le bras latéral 11 de l'appui-cric 1 comprend une patte 23 d'appui et/ou de fixation, et le doigt de pré-maintien 21 s'étend depuis un bord de ladite patte 23 d'appui et/ou de fixation.

L'ajout d'un doigt de pré-maintien 21 rend les étapes de chargement et d'assemblage de la pièce sur le renfort de pied avant plus avantageuses d'un point de vue économique et d'un point de vue procédé. Le gain économique est considérable car aucun outil spécifique de positionnement mécanique et de pré-maintien n'est nécessaire lors du chargement et de l'assemblage de l'appui-cric 1 sur le renfort de pied avant 3, cette fonction étant remplie par le doigt de pré-maintien 21. Une telle substitution simplifie le procédé de chargement et d'assemblage entre l'appui-cric 1 et le renfort 3. Le gain économique se traduit aussi par l'utilisation du doigt remarquable en ce qu'il a une masse et un volume négligeable et en ce qu'il est facile à confectionner.

Le doigt de pré-maintien 21 est confectionné dans le même matériau que le reste de l'appui-cric. Néanmoins, sa taille n'est pas suffisamment grande pour accueillir un point de soudure avec le rebord 25.

Avantageusement, le rebord 25 de la paroi latérale avant du renfort de pied avant 23 montre un logement 27 débouchant sur la cavité 15, recevant ledit doigt de pré-maintien 21 et dimensionné pour placer la surface dudit doigt de pré-maintien 21 en continuité de surface avec la surface dudit rebord. Ledit logement 27 est avantageusement formé par emboutissage et ne débouche pas sur le bord extérieur dudit rebord 25. Cette configuration permet de limiter le nombre d'épaisseurs à souder ensemble au niveau de la feuillure d'assemblage avant.

Quel que soit le mode de réalisation choisi, le bras latéral 11 possède avantageusement une nervure de renfort 19 selon son axe longitudinal. De même, l'homme du métier trouvera avantage à doter le corps de l'appui-cric 1 d'au moins une nervure de renfort 17, de préférence s'étendant entre les extrémités inférieure et supérieure de corps 5 de l'appui-cric 1.

## Revendications

1. Véhicule comprenant :
- un renfort de pied avant (3) se présentant sous forme d'une demi-coque définissant une cavité (15) dont les parois latérales sont bordées par des feuillures d'assemblage formant des rebords (7, 9, 25), la demi-coque formant un coude de sorte à montrer une paroi latérale avant s'étendant verticalement, et deux parois latérales inférieure et supérieure s'étendant selon la direction longitudinale du véhicule; et
- un appui-cric (1) comprenant un corps (5) montrant des extrémités inférieure et supérieure fixées sur les rebords (7, 9) des parois latérales inférieure et supérieure du renfort de pied avant (3) ;
le véhicule est **caractérisé en ce que** l'appui-cric (1) comprend en outre un bras latéral (11) s'étendant depuis un des bords latéraux de son corps (5), en direction de la paroi latérale avant dudit renfort de pied avant (3) jusqu'à se placer en appui contre ladite paroi latérale avant.

2. Véhicule selon la revendication 1, **caractérisé en ce que** le bras latéral (11) de l'appui-cric (1) présente une inclinaison par rapport au plan défini par son corps (5), de sorte à s'enfoncer dans la cavité (15) et à être en contact avec la paroi latérale avant dans ladite cavité (15).

3. Véhicule selon la revendication 2, **caractérisé en ce que** le bras latéral (11) de l'appui-cric (1) comprend en outre une patte (23) d'appui et/ou de fixation disposée en extrémité dudit bras latéral (11), de préférence pour sa fixation à ladite paroi latérale avant.

4. Véhicule selon l'une des revendications 2 ou 3, **caractérisé en ce que** le bras latéral (11) de l'appui-cric (1) comprend, au niveau de son extrémité, un doigt de pré-maintien (21) configuré pour se placer en appui sur le rebord (25) de la paroi latérale avant dudit renfort de pied avant (3), de préférence le bras latéral (11) de l'appui-cric (1) comprend en outre une patte (23) d'appui et/ou de fixation, et le doigt de pré-maintien (21) s'étend depuis un bord de ladite patte (23) d'appui et/ou de fixation.

5. Véhicule selon la revendication 4, **caractérisé en ce que** le rebord (25) de la paroi latérale avant du renfort de pied avant (23) montre un logement (27) débouchant sur la cavité (15), recevant ledit doigt de pré-maintien (21) et dimensionné pour placer la surface dudit doigt de pré-maintien (21) en continuité de surface avec la surface dudit rebord (25).

6. Véhicule selon les revendications 1 à 5, **caractérisé en ce que** l'extrémité de l'appui-cric (1) est fixée au renfort de pied avant (3) par au moins un point de soudure (13).

7. Véhicule selon les revendications 1 à 6, **caractérisé en ce que** le bras latéral (11) de l'appui-cric et/ou le corps (5) de l'appui-cric comprend au moins une nervure (17, 19) de renfort.

8. Appui-cric (1) pour véhicule selon l'une des revendications 1 à 7, comprenant un corps (5) présentant une extrémité supérieure et une extrémité inférieure, l'extrémité inférieure étant configurée pour recevoir la tête d'un cric, ledit appui-cric (1) étant destiné à être fixé dans un renfort de pied avant (3) par ses extrémités inférieure et supérieure ; l'appui-cric (1) est **caractérisé en ce qu'**il comprend en outre un bras latéral (11) s'étendant depuis un des bords latéraux de son corps (5), de sorte à ce que ledit appui-cric montre une forme générale en « L » ou en « T ».

9. Appui-cric (1) pour véhicule selon la revendication 8 **caractérisé en ce que** ledit bras latéral (11) présente deux extrémités, une extrémité reliée au corps (5) de l'appui-cric (1) et une extrémité libre, et :
- montre une inclinaison par rapport au plan formé par le corps (5) de l'appui-cric (1) ; et/ou
- comprend une patte (23) d'appui et/ou de fixation disposée à l'extrémité libre dudit bras latéral (11) ; et/ou
- comprend un doigt de pré-maintien (21) disposé à l'extrémité libre dudit bras latéral (11) ; et/ou
- comprend au moins une nervure de renfort (19) s'étendant selon sa longueur.

## Patentansprüche

1. Fahrzeug mit:
- eine Vorderfußverstärkung (3) in Form einer Halbschale, die einen Hohlraum (15) definiert, dessen Seitenwände von Verbindungsfalten umgeben sind, die Flansche (7, 9, 25) bilden, wobei die Halbschale einen Knick bildet, sodass sie eine vordere, sich vertikal erstreckende Seitenwand und zwei untere und obere Seitenwände aufweist, die sich in Längsrichtung des Fahrzeugs erstrecken, und
- eine Wagenheberabstützung (1) mit einem Körper (5), der untere und obere Enden aufweist, die an den Flanschen (7, 9) der unteren und oberen Seitenwand der vorderen Fußverstärkung (3) befestigt sind;
das Fahrzeug ist **dadurch gekennzeichnet, dass** die Wagenheberstütze (1) außerdem einen seitlichen Arm (11) umfasst, der sich von einem der seitlichen Ränder ihres Körpers (5) in Richtung der vorderen Seitenwand der vorderen Fußverstärkung (3) erstreckt, bis er sich an der vorderen Seitenwand abstützt.

2. Fahrzeug nach Anspruch 1, **dadurch gekennzeichnet, dass** der Seitenarm (11) der Wagenheberstütze (1) eine Neigung in Bezug auf die durch ihren Körper (5) definierte Ebene aufweist, sodass er in die Ausnehmung (15) eindringt und mit der vorderen Seitenwand in der Ausnehmung (15) in Kontakt steht.

3. Fahrzeug nach Anspruch 2, **dadurch gekennzeichnet, dass** der Seitenarm (11) der Wagenheberstütze (1) ferner eine am Ende des Seitenarms (11) angeordnete Auflage- und/oder Befestigungslasche (23) aufweist, vorzugsweise zur Befestigung an der vorderen Seitenwand.

4. Fahrzeug nach einem der Ansprüche 2 oder 3, **dadurch gekennzeichnet, dass** der seitliche Arm (11) der Wagenheberstütze (1) an seinem Ende einen Vorhaltefinger (21) aufweist, der so ausgebildet ist, dass er sich auf dem Rand (25) der vorderen Seitenwand der vorderen Fußverstärkung (3) abstützt, wobei vorzugsweise der seitliche Arm (11) der Wagenheberstütze (1) ferner eine Anschlag- und/oder Befestigungslasche (23) aufweist, und der Vorhaltefinger (21) sich von einem Rand der Lasche (2) erstreckt (3) Stützen und/oder Befestigen.

5. Fahrzeug nach Anspruch 4, **dadurch gekennzeichnet, dass** der Rand (25) der vorderen Seitenwand der vorderen Fußverstärkung (23) eine Aufnahme (27) aufweist, die in den Hohlraum (15) mündet, den Vorhaltefinger (21) aufnimmt und so bemessen ist, dass die Oberfläche des Vorhaltefingers (21) in Oberflächenkontinuität mit der Oberfläche des Randes (25) gebracht wird.

6. Fahrzeug nach den Ansprüchen 1 bis 5, **dadurch gekennzeichnet, dass** das Ende der Wagenheberstütze (1) an der vorderen Fußverstärkung (3) durch mindestens eine Schweißstelle (13) befestigt ist.

7. Fahrzeug nach den Ansprüchen 1 bis 6, **dadurch gekennzeichnet, dass** der Seitenarm (11) der Wagenheberauflage und/oder der Körper (5) der Wagenheberauflage mindestens eine Verstärkungsrippe (17, 19) aufweist.

8. Wagenheberstütze (1) für ein Fahrzeug nach einem der Ansprüche 1 bis 7, mit einem Körper (5), der ein oberes Ende und ein unteres Ende aufweist, wobei das untere Ende zur Aufnahme des Kopfes einer Wagenhebervorrichtung ausgebildet ist, wobei die Wagenheberstütze (1) dazu bestimmt ist, mit ihrem unteren und oberen Ende in einer vorderen Fußverstärkung (3) befestigt zu werden; die Wagenheberstütze (1) ist **dadurch gekennzeichnet, dass** sie ferner einen Seitenarm (11) aufweist, der sich von einer der Seitenkanten ihres Körpers (5) erstreckt, sodass die Wagenheberstütze eine allgemeine "L"- oder "T"-Form aufweist.

9. Wagenheberstütze (1) für ein Fahrzeug nach Anspruch 8, **dadurch gekennzeichnet, dass** der Seitenarm (11) zwei Enden aufweist, wobei ein Ende mit dem Körper (5) der Wagenheberstütze (1) verbunden ist und ein freies Ende und:
- eine Neigung zur Ebene des Wagenheberkörpers (5) der Wagenheberstütze (1) zeigt; und/oder
- eine am freien Ende des Seitenarms (11) angeordnete Stütz- und/oder Befestigungslasche (23) aufweist; und/oder
- einen am freien Ende des Seitenarms (11) angeordneten Vorhaltefinger (21) aufweist; und/oder
- umfasst mindestens eine sich entlang ihrer Länge erstreckende Verstärkungsrippe (19).

## Claims

1. Vehicle comprising:
- a front foot reinforcement (3) in the form of a half-shell defining a cavity (15), the side walls of which are bordered by rim-forming connecting webs (7, 9, 25), the half-shell forming an elbow so as to show a front side wall extending vertically, and two lower and upper side walls extending in the longitudinal direction of the vehicle; and
- a jack rest (1) comprising a body (5) having lower and upper ends fixed to the flanges (7, 9) of the lower and upper side walls of the front foot reinforcement (3);
the vehicle is **characterized in that** the jack support (1) further comprises a lateral arm (11) extending from one of the lateral edges of its body (5), in the direction of the front lateral wall of said front foot reinforcement (3) until it is placed in abutment against said front lateral wall.

2. Vehicle according to claim 1, **characterized in that** the lateral arm (11) of the jack support (1) has an inclination with respect to the plane defined by its body (5), so as to be inserted into the cavity (15) and to be in contact with the front lateral wall in said cavity (15).

3. Vehicle according to claim 2, **characterized in that** the lateral arm (11) of the jack support (1) further comprises a support and/or fixing lug (23) arranged at the end of said lateral arm (11), preferably for its fixing to said front lateral wall.

4. Vehicle according to one of Claims 2 or 3, **characterized in that** the lateral arm (11) of the jack support (1) comprises, at its end, a pre-holding finger (21) configured to bear on the rim (25) of the front lateral wall of said front foot reinforcement (3), preferably the lateral arm (11) of the jack support (1) further comprises a support and/or fixing tab (23), and the pre-holding finger (21) extends from an edge of said tab (2) 3) support and/or fastening.

5. Vehicle according to claim 4, **characterized in that** the rim (25) of the front side wall of the front foot reinforcement (23) shows a housing (27) opening out onto the cavity (15), receiving said pre-holding finger (21) and dimensioned to place the surface of said pre-holding finger (21) in surface continuity with the surface of said rim (25).

6. Vehicle according to Claims 1 to 5, **characterized in that** the end of the jack support (1) is fixed to the front foot reinforcement (3) by at least one welding point (13).

7. Vehicle according to Claims 1 to 6, **characterized in that** the lateral arm (11) of the jack support and/or the body (5) of the jack support comprises at least one reinforcing rib (17, 19).

8. A vehicle jack (1) according to one of claims 1 to 7, comprising a body (5) having an upper end and a lower end, the lower end being configured to receive the head of a jack, said jack (1) being adapted to be fixed in a front foot reinforcement (3) by its lower and upper ends; the jack (1) is **characterized in that** it further comprises a lateral arm (11) extending from one of the lateral edges of its body (5), so that said jack has a general "L" or "T" shape.

9. Vehicle jack (1) according to claim 8, **characterized in that** said lateral arm (11) has two ends, one end connected to the body (5) of the jack (1) and one free end, and:
- shows an inclination with respect to the plane formed by the body (5) of the jack support (1); and/or
- includes a support and/or fastening tab (23) disposed at the free end of said side arm (11); and/or
- comprises a pre-holding finger (21) disposed at the free end of said side arm (11); and/or
- comprises at least one reinforcing rib (19) extending along its length.
